# EUROPEAN PATENT SPECIFICATION

(11) **EP 3 581 748 B1**
(45) Date of publication and mention of the grant of the patent: **29.05.2024**
(21) Application number: 19275075.0
(22) Date of filing: 05.06.2019
(51) Int. Cl.: E05F 15/44, H01H 3/14

(54) **DETECTOR**
DETEKTOR
DÉTECTEUR

(30) Priority: 12.06.2018 JP 2018112087
(43) Date of publication of application: 18.12.2019
(73) Proprietor: Proterial, Ltd., Tokyo (JP)
(72) Inventor: AKIMOTO, Katsuya, Minato-ku, Tokyo 108-0075 (JP); SUZUKI, Shuichi, Minato-ku, Tokyo 108-0075 (JP); KAWASE, Kenji, Minato-ku, Tokyo 108-0075 (JP)
(74) Representative: Wilson Gunn

(56) References cited:
- EP-A1- 0 489 610
- EP-A2- 0 869 250
- US-A1- 2014 318 934

## Description

### TECHNICAL FIELD OF THE INVENTION

The present invention relates to a detector, and particularly, the present invention relates to a detector that includes a catch detecting sensor and a detecting unit, which are installed in a vehicle.

### BACKGROUND OF THE INVENTION

A technique regarding a catch detecting sensor to be installed in a vehicle such as an automobile is described in Japanese Patent Application Publication No. 2014-216300 (hereinafter, referred to as "Patent Document 1"), for example. A catch detecting sensor provided with a tubular member is described in Patent Document 1. The tubular member includes a plurality of electrode wires that are disposed so as to be separated from each other. When an object (hereinafter, including a passenger, a baggage, and the like) is caught, an external force causes the tubular member to be deformed so as to be squashed. This causes the electrode wires to come into contact with each other, whereby a detecting unit outputs a detection signal that indicates a catch.

### SUMMARY OF THE INVENTION

The catch detecting sensor is installed so as to extend along a slide door of an automobile or a door of a railway vehicle. For this reason, the electrode wire becomes relatively longer. Therefore, it is assumed that the electrode wire is disconnected. When disconnection of the electrode wire occurs and a portion of the electrode wire at far end from a disconnected part comes into contact with the detecting unit, the detecting unit does not output a detection signal that indicates a catch. In order to secure safety, it is important to diagnose the catch detecting sensor and grasp a failure of the catch detecting sensor such as disconnection.

Patent Document 1 fails to recognize and describe the failure of the catch detecting sensor.

The present invention has been made in view of the problem described above. It is an object of the present invention as defined in the appended claims to provide a technique allowing a catch to be detected by using a catch detecting sensor, and allowing the catch detecting sensor to be diagnosed. Further, it is also an object of the present invention to provide a technique allowing a diagnosis of the catch detecting sensor to be carried out with low power consumption.

An outline of representative invention of the present invention disclosed in the present application will briefly be explained as follows.

Namely, according to the present invention as defined in the appended claims, there is provided a detector that includes a catch detecting sensor provided with a detecting member, and a detecting unit connected to the catch detecting sensor. The detecting unit is configured to output a detection signal based on a result detected by the catch detecting sensor when a detection mode is specified. Further, the detecting unit is configured to output a diagnostic signal based on a failure of the catch detecting sensor when a diagnostic mode is specified.

Effects obtained by the present invention as defined in the appended claims will briefly be explained as follows.

Namely, it is possible to execute detection of a catch of an object and a diagnosis of a catch detecting sensor by the detector.

### BRIEF DESCRIPTIONS OF THE DRAWINGS

The foregoing and other objects, features and advantages of the present invention will become more readily apparent from the following detailed description of embodiments of the present invention that proceeds with reference to the appending drawings:
FIG. 1 is a block diagram illustrating a configuration of a detector according to a first embodiment;
FIG. 2 is a cross-sectional view of a catch detecting sensor according to the first embodiment;
FIGS. 3(A) and 3(B) are a perspective view of the catch detecting sensor according to the first embodiment;
FIG. 4 is a cross-sectional view for explaining a state of the catch detecting sensor according to the first embodiment;
FIG. 5 is a cross-sectional view for explaining a state of the catch detecting sensor according to the first embodiment;
FIG. 6 is a cross-sectional view for explaining a state of the catch detecting sensor according to the first embodiment;
FIG. 7 is a view for explaining an operation of the detector according to the first embodiment;
FIG. 8 is a view for explaining determination in each of a detection mode and a diagnostic mode according to the first embodiment;
FIG. 9 is a block diagram illustrating a configuration of a detecting unit according to a second embodiment; and
FIGS. 10(A) and 10(B) are schematic views illustrating a configuration of a railway vehicle on which a detector according to the first embodiment is installed.

### DESCRIPTIONS OF EMBODIMENTS

Hereinafter, each of embodiments according to the present invention will be described with reference to the drawings. In order to clarify the description, a width, a thickness, a shape, and the like of respective portions may be schematically illustrated in the drawings as compared with actual forms . However, each of them is merely one example, and the interpretation of the present invention is not limited by them.

Further, in this specification and the respective drawings, the same reference numerals are respectively assigned to the similar components described in the drawings, which have already been described. Detailed description thereof may be omitted appropriately.

### (First Embodiment)

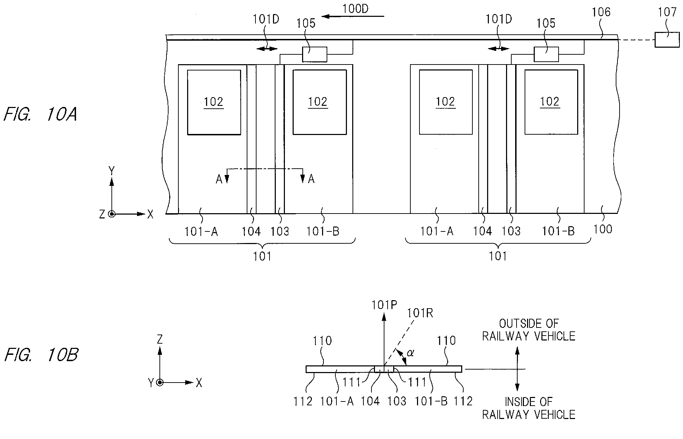

FIG. 10 is a schematic view illustrating a configuration of a railway vehicle on which a detector according to a first embodiment is installed. FIG. 10(A) illustrates a side view of a railway vehicle 100 when viewed from the outside of the railway vehicle 100. In FIG. 10(A), a reference numeral 101 denotes an entrance door of the railway vehicle 100. A plurality of entrance doors is provided in the railway vehicle 100. However, two entrance doors are drawn in FIG. 10 (A) . Movable doors 101-A and 101-B are installed in each entrance door 101 of the railway vehicle 100.

In FIG. 10 (A), a reference numeral 103 denotes a catch detecting sensor that is installed at a side surface of the door 101-B, and a reference numeral 104 denotes a catch detecting sensor that is installed at a side surface of the door 101-A. When the doors 101-A and 101-B respectively move in a direction indicated by an arrow 101D in FIG. 10 (A), the doors 101-A and 101-B are opened or closed. When the doors 101-A and 101-B are closed, the catch detecting sensors 103 and 104 respectively installed at the side surfaces of the doors 101-B and 101-A come into contact with each other. Note that in FIG. 10(A), a reference numeral 102 denotes a window that is provided each of the doors 101-A and 101-B.

The catch detecting sensor 103 is deformed when an object is caught (or interposed) between the catch detecting sensors 103 and 104, or when the caught object is being pulled out. The catch detecting sensor 103 then outputs a detection signal to a detecting unit 105. Although it is not limited particularly in the first embodiment, the catch detecting sensor 104 is configured by a dummy catch detecting sensor. The catch detecting sensor 104 is also deformed when an object is caught (or interposed) between the catch detecting sensors 103 and 104, or when the caught object is being pulled out. However, the catch detecting sensor 104 outputs no detection signal. By configuring the catch detecting sensor 104 by the dummy catch detecting sensor in this manner, it is possible to suppress a cost spent for detection of a catch because any pressure-sensitive detecting member (will be described later) is not required and used.

The detecting unit 105 is provided for each catch detecting sensor 103 installed in the entrance door 101. A mode signal indicating any of a detection mode and a diagnostic mode is supplied to the detecting unit 105 via a wiring 106 installed in the railway vehicle 100. In a case where the detection mode is specified by the mode signal, the detecting unit 105 determines a caught state or a pulling-out state of the object on the basis of a state of the corresponding catch detecting sensor 103. The detecting unit 105 then outputs a determination result to the wiring 106 as the detection signal. On the other hand, in a case where the diagnostic mode is specified by the mode signal, the detecting unit 105 executes a diagnosis regarding a failure of the corresponding catch detecting sensor 103. The detecting unit 105 then outputs a diagnostic result to the wiring 106 as a diagnostic signal.

Although it is not limited particularly, the wiring 106 is connected to an operating and informing unit (hereinafter, referred to as an "operating/informing unit") 107. The operating/informing unit 107 is provided in at least one of a conductor's compartment or a train driver's cab of the railway vehicle 100. A conductor or a train driver supplies the mode signal, by which the diagnostic mode or the detection mode is specified, to the detecting unit 105 provided for each door 101-A or 101-B or all of the detecting units 105 by using the operating/informing unit 107. In a case where the detection mode is specified by the mode signal, the operating/informing unit 107 outputs information based on the detection signal supplied via the wiring 106. On the other hand, in a case where the diagnostic mode is specified by the mode signal, the operating/informing unit 107 outputs information based on the diagnostic signal supplied via the wiring 106.

FIG. 10(B) is a cross-sectional view illustrating a cross section taken along a line A-A in FIG. 10(A). A cross section of the doors 101-A and 101-B in a state where the doors 101-A and 101-B are closed is drawn in FIG. 10(B). Arrows X, Y and Z illustrated in FIG. 10 respectively denote coordinate axes. As illustrated in FIG. 10(B), on the basis of the doors 101-A and 101-B, a direction in which a value of a Z-coordinate increases denotes the outside of the railway vehicle 100, and an opposite direction thereof denotes the inside of the railway vehicle 100.

The door 101-B includes an outer side surface 110, an inner side surface 112, and a side surface 111. The outer side surface 110 faces the outside of the railway vehicle 100. The inner side surface 112 faces the inside of the railway vehicle 100. The catch detecting sensor 103 is installed in the side surface 111. In the similar manner to the door 101-B, the door 101-A also includes an outer side surface 110, an inner side surface 112, and a side surface 111 in which the catch detecting sensor 104 is installed.

According to the invention, presence or absence of pulling out is determined with respect to each of two kinds of pulling out. The two kinds of pulling out to be determined will be described with reference to FIG. 10(B). The two kinds of pulling out include "pulling out in a vertical direction" and "pulling out in an oblique direction". The "pulling out in a vertical direction" means that an object caught between the doors 101-A and 101-B is pulled out in a direction perpendicular to main surfaces of the doors 101-A and 101-B (that is, the outer side surface 110 and the inner side surface 112) . The "pulling out in an oblique direction" means that an object caught between the doors 101-A and 101-B is pulled out in a direction oblique with respect to the main surfaces of the doors 101-A and 101-B. They will be explained with reference to FIG. 10 (B) . As the pulling out in the vertical direction, an object caught between the doors 101-A and 101-B is pulled out in a direction 101P perpendicular to the outer side surface 110. On the other hand, as the pulling out in the oblique direction, an object caught between the doors 101-A and 101-B is pulled out in a direction 101R by an angle α with respect to the outer side surface 110 of the door 101-B, for example. This angle α is in a range from 0° to 180° except for 90°, for example. The angle α may usually be about 0° to 60°.

An action of the pulling out in the vertical direction occurs when the railway vehicle 100 stops and a passenger carries out an operation to pull out an object caught between the doors 101-A and 101-B, for example. On the other hand, an action of pulling out in the oblique direction occurs when a passenger carries out an operation to pull out an object caught between the doors 101-A and 101-B during traveling of the railway vehicle 100. For example, in a case where a passenger carries out the operation to pull out a caught object while the object is pulled by the traveling railway vehicle 100, the pulling out in the oblique direction occurs. For that reason, the pulling out in the oblique direction may be referred to as "dragging a passenger".

The pulling out of an object toward the outside of the railway vehicle 100 has been described as an example. However, pulling out of an object toward the inside of the railway vehicle 100 can similarly be classified into pulling out in a vertical direction and pulling out in an oblique direction.

### <Basic Configuration of Detector>

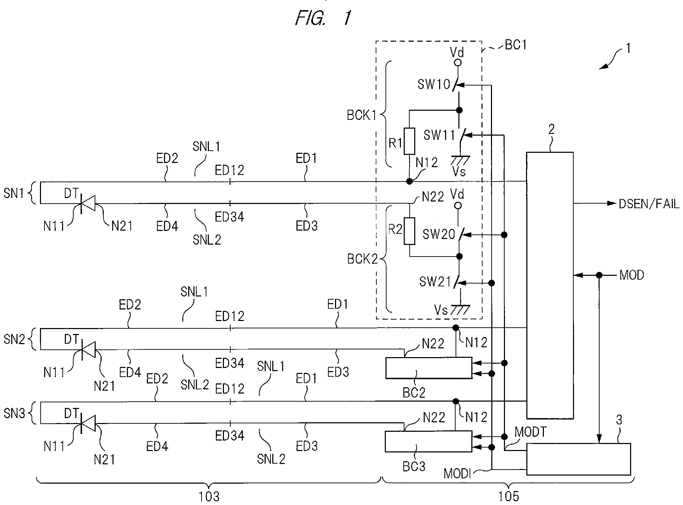

FIG. 1 is a block diagram illustrating a configuration of a detector 1 according to the first embodiment. The detector 1 includes the catch detecting sensor 103 and the detecting unit 105.

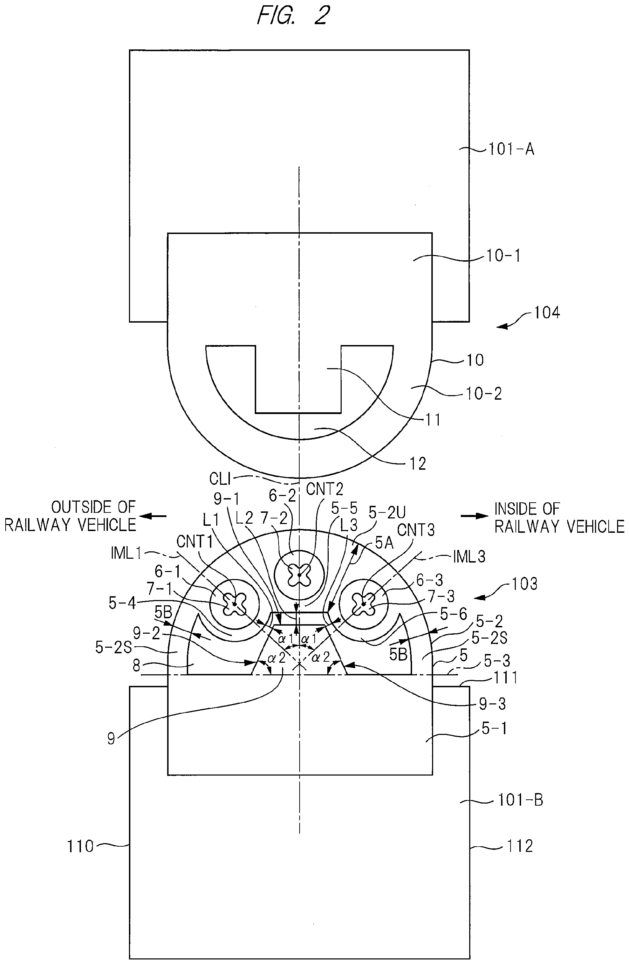

The catch detecting sensor 103 includes three pressure-sensitive detecting members (hereinafter, referred to also as "detecting members"), which will be described later in detail with reference to FIG. 2. Each of the three pressure-sensitive detecting members includes a pair of electrode wires and a unidirectional element, and serves as a sensor configured to detect a catch. FIG. 1 illustrates three sensors configured by the three pressure-sensitive detecting members as reference numerals SN1 to SN3. Each of the sensors SN1 to SN3 has the same configuration as each other. Thus, its configuration will be described herein by using the sensor SN1 as an example.

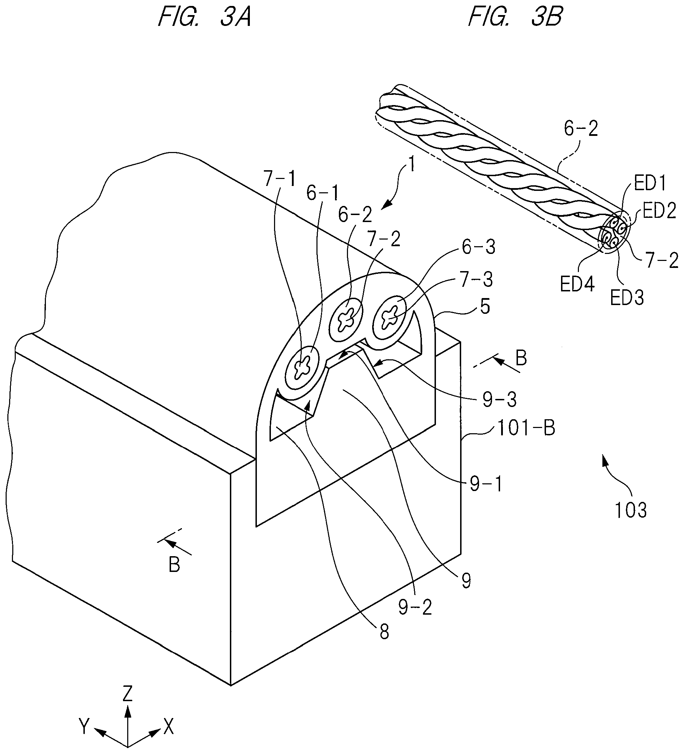

The sensor SN1 includes a pair of electrode wires SNL1 and SNL2, and a unidirectional element connected between first ends N11 and N21 of the respective electrode wires SNL1 and SNL2. In the first embodiment, the unidirectional element is configured by a diode DT. An anode of the diode DT is connected to the first end N11 of the electrode wire SNL1, and a cathode of the diode DT is connected to the first end N21 of the electrode wire SNL2. During the detection mode, the diode DT is biased in a reverse direction so that no current flows therethrough. This causes the diode DT to serve as a termination resistor during the detection mode. On the other hand, during the diagnostic mode, the diode DT is biased in a forward direction so that a current flows therethrough. Note that reference numerals ED1 to ED4, ED12, and ED34 respectively attached to the electrode wires SNL1 and SNL2 will be described later with reference to FIG. 3.

The detecting unit 105 includes three bias circuits BC1 to BC3, a voltage detecting/determining circuit (hereinafter, referred to also as a "voltage detecting circuit" or "detecting circuit") 2, and a mode switching circuit 3. The bias circuits BC1 to BC3 are respectively connected to the corresponding pressure-sensitive detecting members. Further, the voltage detecting circuit 2 is connected to each of the three sensors SN1 to SN3 respectively configured by the three pressure-sensitive detecting members. Each of the three bias circuits BC1 to BC3 has the same configuration as each other. Therefore, a configuration of the bias circuit will be described by using the bias circuit BC1 corresponding to the sensor SN1 as an example. Note that in a case where the three sensors SN1 to SN3 are mentioned separately, the sensor SN1 is referred to as a "first sensor SN1", the sensor SN2 is referred to as a "second sensor SN2", and the sensor SN3 is referred to as a "third sensor SN3".

The bias circuit BC1 includes a first bias circuit BCK1 and a second bias circuit BCK2 respectively connected to the pair of electrode wires SNL1 and SNL2. The first bias circuit BCK1 includes a first switch SW10 and a second switch SW11, and a pull-up resistor (resistive element) R1. The first switch SW10 and the second switch SW11 are connected in series between a first voltage Vd and a second voltage Vs. The pull-up resistor R1 is connected between a connection node at which the first switch SW10 and the second switch SW11 are connected and a second end N12 of the electrode wire SNL1. Further, the second bias circuit BCK2 includes a third switch SW20 and a fourth switch SW21, and a pull-down resistor (resistive element) R2. The third switch SW20 and the fourth switch SW21 are connected in series between the first voltage Vd and the second voltage Vs. The pull-down resistor R2 is connected between a connection node at which the third switch SW20 and the fourth switch SW21 are connected and a second end N22 of the electrode wire SNL2.

For example, the first voltage Vd is a power supply voltage, and the second voltage Vs is a ground voltage. Further, each of the first end N11 and the second end N12 is an end of the electrode wire SNL1, and each of the first end N21 and the second end N22 is an end of the electrode wire SNL2.

Each of the first switch SW10 to the fourth switch SW21 is controlled between an ON state and an OFF state by internal mode signals MODI and MODT. Namely, each of the first switch SW10 and the fourth switch SW21 is controlled by the internal mode signal MODI so as to be switched between the ON state and the OFF state. Each of the second switch SW11 and the third switch SW20 is controlled by the internal mode signal MODT so as to be switched between the ON state and the OFF state. The internal mode signal MODT is a signal whose phase is inverted with respect to the internal mode signal MODI. This causes the first switch SW10 and the second switch SW11 to become the ON state or the OFF state in a complementary manner in the first bias circuit BCK1 in accordance with the internal mode signal MODI and the internal mode signal MODT. Similarly, this causes the third switch SW20 and the fourth switch SW21 to become the ON state or the OFF state in a complementary manner in the second bias circuit BCK2 in accordance with the internal mode signals MODI and MODT.

In this case, the first switch SW10 and the fourth switch SW21 are synchronized to become either the ON state or the OFF state in accordance with the internal mode signal MODI. The first switch SW10 is connected between the first voltage Vd and the pull-up resistor R1. The fourth switch SW21 is connected between the second voltage Vs and the pull-down resistor R2. Similarly, the second switch SW11 and the third switch SW20 are synchronized to become either the ON state or the OFF state in accordance with the internal mode signal MODI. The second switch SW11 is connected between the second voltage Vs and the pull-up resistor R1. The third switch SW20 is connected between the first voltage Vd and the pull-down resistor R2.

A mode signal MOD is supplied to the mode switching circuit 3 from the operating/informing unit 107 (see FIG. 10) via the wiring 106 (see FIG. 10) . A mode of the detector 1 is specified to either the detection mode or the diagnostic mode on the basis of a voltage of this mode signal MOD. The mode switching circuit 3 generates the internal mode signals MODI and MODT on the basis of the mode signal MOD. Although it is not limited particularly, the mode switching circuit 3 generates the supplied mode signal MOD as the internal mode signal MODI, and inverts a phase of the mode signal MOD to generate the internal mode signal MODT.

Each of the first switch SW10 to the fourth switch SW21 illustrated in FIG. 1 becomes the ON state when the internal mode signal to be supplied is in a high level (which corresponds to the first voltage Vd) . Each of the first switch SW10 to the fourth switch SW21 becomes the OFF state when the internal mode signal is in a low level (which corresponds to the second voltage Vs). The detection mode is specified by setting the mode signal MOD to the high level. Further, the diagnostic mode is specified by setting the mode signal MOD to the low level.

The voltage detecting circuit 2 detects a voltage at the electrode wire SNL1 of each of the sensors SN1 to SN3. The voltage detecting circuit 2 then outputs a determination result and a diagnostic result based on the detected voltage to the operating/informing unit 107 via the wiring 106. More specifically, the mode signal MOD is supplied to the voltage detecting circuit 2, and the second end N12 of the electrode wire SNL1 in each of the sensors SN1 to SN3 is connected to the voltage detecting circuit 2. In a case where the detection mode is specified by the mode signal MOD, the voltage detecting circuit 2 sets, as the determination result, a state corresponding to a combination of the voltages of the second ends N12 in the respective sensors SN1 to SN3. The voltage detecting circuit 2 then outputs the state to a detection signal DSEN. On the other hand, in a case where the diagnostic mode is specified by the mode signal MOD, the voltage detecting circuit 2 determines whether the voltage at the second end N12 in each of the sensors SN1 to SN3 exceeds a predetermined voltage (that is, a threshold voltage) or not. The voltage detecting circuit 2 then outputs a determination result as a diagnostic signal FAIL. In this case, the diagnostic signal FAIL is outputted to each of the sensors SN1 to SN3.

### <Catch Detecting Sensor>

Next, a structure of the catch detecting sensor 103 will be described. FIG. 2 is a cross-sectional view of the catch detecting sensor according to the first embodiment. FIG. 3 is a perspective view of the catch detecting sensor according to the first embodiment. Here, FIG. 3 (A) is a perspective view of the catch detecting sensor 103. FIG. 3(B) is a perspective view of one of the pressure-sensitive detecting members included in the catch detecting sensor 103. FIG. 2 is a cross-sectional view when viewed from a cross section taken along a line B-B in FIG. 3(A).

The catch detecting sensor 103 includes a deformable cover member 5 installed on the side surface 111 of the door 101-B. The cover member 5 extends along an extending direction Y of the door 101-B. As illustrated in FIG. 3, the cover member 5 covers three pressure-sensitive detecting members 6-1 to 6-3 each of which extends in the same direction as that of the cover member 5. Further, the cover member 5 also covers a hollow part 8 that extends in the same direction as that of the cover member 5. The cover member 5 of the catch detecting sensor 103 is formed of rubber, for example. As illustrated in FIG. 2, a part of the cover member 5 (herein, a base portion) is embedded in the side surface 111 of the door 101-B.

When viewed as the cross section as illustrated in FIG. 2, the cover member 5 includes a thick base portion 5-1 and an elastic deforming portion 5-2 to be deformed. The base portion 5-1 is embedded in the door 101-B. The deforming portion 5-2 faces the dummy catch detecting sensor 104 installed in the door 101-A. The hollow part 8 is provided between the base portion 5-1 and the deforming portion 5-2. Further, the deforming portion 5-2 includes an upper surface deforming portion 5-2U and side surface deforming portions 5-2S. The upper surface deforming portion 5-2U is opposed to a base surface 5-3 of the base portion 5-1 when viewed as the cross section. The upper surface deforming portion 5-2U covers the pressure-sensitive detecting members 6-1 to 6-3. The side surface deforming portions 5-2S are formed integrally with the upper surface deforming portion 5-2U and the base portion 5-1 so as to couple the upper surface deforming portion 5-2U to the base portion 5-1.

The pressure-sensitive detecting member 6-2 that is a second pressure-sensitive detecting member is buried in the upper surface deforming portion 5-2U so that a center point CNT2 of the pressure-sensitive detecting member 6-2 is disposed on a center line CLI of the cover member 5. Further, the pressure-sensitive detecting member 6-3 that is a third pressure-sensitive detecting member is also buried in the upper surface deforming portion 5-2U that is located at one side with respect to the center line CLI (at a right side in FIG. 2) . Moreover, the pressure-sensitive detecting member 6-1 that is a first pressure-sensitive detecting member is also buried in the upper surface deforming portion 5-2U that is located at the other side with respect to the center line CLI (at a left side in FIG. 2). An angle between a virtual straight line IML3 and the center line CLI is the same angle α1 as an angle between a virtual straight line IML1 and the center line CLI. The virtual straight line IML3 is configured by connecting a predetermined point on the center line CLI to a center point CNT3 of the third pressure-sensitive detecting member 6-3. The virtual straight line IML1 is configured by connecting the predetermined point on the center line CLI to a center point CNT1 of the first pressure-sensitive detecting member 6-1. Although it is not limited particularly, the angle α1 is 45°. Thus, the catch detecting sensor 103 includes the upper surface deforming portion 5-2U and the side surface deforming portion 5-2S that are laterally symmetric on the basis of the center line CLI.

Each of the first to third pressure-sensitive detecting members 6-1 to 6-3 may be deformed so as to be squashed by being pressed to a receiving portion 9 (will be described later) when an object is caught or pulled out. When the first to third pressure-sensitive detecting members 6-1 to 6-3 are pressed to the receiving portion 9, a part of the upper surface deforming portion 5-2U lies between each of the first to third pressure-sensitive detecting members 6-1 to 6-3 and the receiving portion 9 as a cover portion. In FIG. 2, the cover portion is denoted by reference numerals 5-4 to 5-6.

In FIG. 2, one side with respect to the center line CLI denotes the inside of the railway vehicle 100, and the other side with respect to the center line CLI denotes the outside of the railway vehicle 100. In a case where an object is caught between the catch detecting sensors 103 and 104 or in a case where an object is pulled out therefrom, the deforming portion 5-2 is deformed, and at least one of the first to third pressure-sensitive detecting members 6-1 to 6-3 is squashed. In order that any of the first to third pressure-sensitive detecting members 6-1 to 6-3 is surely squashed, the receiving portion 9 is provided on the base portion 5-1 that receives at least one of the first to third pressure-sensitive detecting members 6-1 to 6-3 when the deforming portion 5-2 is deformed. As illustrated in FIG. 2, an outer shape of the receiving portion 9 has a trapezoidal shape in which an area of a cross section thereof becomes narrower toward the upper surface deforming portion 5-2U from the base portion 5-1. Namely, the receiving portion 9 includes an upper surface 9-1, a first slope 9-2, and a second slope 9-3. The upper surface 9-1 is parallel to the base surface 5-3 on which the base portion 5-1 is in contact with the hollow part 8. The first slope 9-2 causes the upper surface 9-1 to be coupled to the base surface 5-3. The second slope 9-3 causes the upper surface 9-1 to be coupled to the base surface 5-3. The receiving portion 9 is a trapezoidal shape in which the upper surface 9-1 facing the upper surface deforming portion 5-2U is narrower than a bottom surface facing the base surface 5-3. Therefore, an interior angle α2 between the base surface 5-3 and each of the first slope 9-2 and the second slope 9-3 exceeds 0° and is less than 90°.

The center line CLI of the cover member 5 passes through the center of the upper surface 9-1 of the receiving portion 9. The receiving portion 9 has a structure so as to be laterally symmetric on the basis of the center line CLI as illustrated in FIG. 2. Note that the receiving portion 9 is also formed of rubber as well as the cover member 5.

When the deforming portion 5-2 is deformed due to a catch or pulling out, the upper surface 9-1 of the receiving portion 9 acts as a receiving surface of the second pressure-sensitive detecting member 6-2 that faces the upper surface 9-1; the first slope 9-2 of the receiving portion 9 acts as a receiving surface of the first pressure-sensitive detecting member 6-1 that faces the first slope 9-2; and the second slope 9-3 of the receiving portion 9 acts as a receiving surface of the third pressure-sensitive detecting member 6-3 that faces the second slope 9-3. Namely, in a case where the second pressure-sensitive detecting member 6-2 is moved by deformation of the deforming portion 5-2, the second pressure-sensitive detecting member 6-2 is pressed toward the upper surface 9-1 of the receiving portion 9 via a cover portion 5-5. Further, in a case where the first pressure-sensitive detecting member 6-1 is moved by deformation of the deforming portion 5-2, the first pressure-sensitive detecting member 6-1 is pressed toward the first slope 9-2 of the receiving portion 9 via the cover portion 5-4. Moreover, in a case where the third pressure-sensitive detecting member 6-3 is moved by deformation of the deforming portion 5-2, the third pressure-sensitive detecting member 6-3 is pressed toward the second slope 9-3 of the receiving portion 9 via the cover portion 5-6.

In the first embodiment, the outer shape of the receiving portion 9 is a trapezoidal shape. When the deforming portion 5-2 is deformed, a pressure deforms the receiving portion 9. This makes it possible to reduce absorption of the pressure due to the deformation of the receiving portion 9. As a result, it is possible to increase an external force to be applied to each of the first to third pressure-sensitive detecting members 6-1 to 6-3.

Each of the first to third pressure-sensitive detecting members 6-1 to 6-3 has the same structure. Therefore, the pressure-sensitive detecting member will be described by using the second pressure-sensitive detecting member 6-2 as an example. As illustrated in FIG. 3(B), the second pressure-sensitive detecting member 6-2 is a tubular detecting member that includes electrode wires ED1 to ED4. The electrode wires ED1 to ED4 are spaced from each other. In the second pressure-sensitive detecting member 6-2, a member enclosing the spaced electrode wires ED1 to ED4 has elasticity. When an external force is applied to the second pressure-sensitive detecting member 6-2, a hollow part 7-2 is deformed so that a spaced distance among the electrode wires ED1 to ED4 varies. The plurality of electrode wires ED1 to ED4 constituting the second pressure-sensitive detecting member 6-2 is formed into a spiral shape along a longitudinal direction of the second pressure-sensitive detecting member 6-2. This makes it possible to detect an external force from all directions in a radial direction of the second pressure-sensitive detecting member 6-2.

In the first embodiment, as described above and illustrated in FIG. 2 and FIG. 3, the first pressure-sensitive detecting member 6-1 constitutes the first sensor SN1 illustrated in FIG. 1, the second pressure-sensitive detecting member 6-2 constitutes the second sensor SN2, and the third pressure-sensitive detecting member 6-3 constitutes the third sensor SN3. Further, the electrode wires SNL1 and SNL2 constituting each of the sensors SN1 to SN3 are configured by the electrode wires ED1 to ED4 provided in each of the first to third pressure-sensitive detecting members 6-1 to 6-3.

An example in which the electrode wires SNL1 and SNL2 in the second sensor SN2 is constituted by the electrode wires ED1 to ED4 provided in the second pressure-sensitive detecting member 6-2 will be described with reference to FIG. 1 and FIG. 3. The electrode wire SNL1 illustrated in FIG. 1 is configured by the two electrode wires ED1 and ED2 illustrated in FIG. 3 (B) . The electrode wire SNL2 illustrated in FIG. 1 is configured by the two electrode wires ED3 and ED4 illustrated in FIG. 3(B). Namely, one end of the electrode wire ED1 is electrically connected to one end of the electrode wire ED2 at a connecting portion denoted by the reference numeral ED12 in FIG. 1. Thus, the other end of the electrode wire ED1 becomes the second end N12 of the electrode wire SNL1 illustrated in FIG. 1, and the other end of the electrode wire ED2 becomes the first end N11 of the electrode wire SNL1 illustrated in FIG. 1. Similarly, one end of the electrode wire ED3 is electrically connected to one end of the electrode wire ED4 at a connecting portion denoted by the reference numeral ED34 in FIG. 1. Thus, the other end of the electrode wire ED3 becomes the second end N22 of the electrode wire SNL2 illustrated in FIG. 1, and the other end of the electrode wire ED4 becomes the first end N21 of the electrode wire SNL2 illustrated in FIG. 1.

Therefore, as illustrated in FIG. 1, the pair of electrode wires SNL1 and SNL2 are constituted by the four electrode wires ED1 to ED4 disposed so as to extend in the same direction. FIG. 1 illustrates that the diode DT for the termination resistor is arranged on the opposite side of the detecting unit 105 so as to be put between the electrode wires SNL1 and SNL2. However, the ends adjacent to each other (that is, the ends of the electrode wires ED1 and ED2) are connected to each other at the connecting portion ED12, and the ends adjacent to each other (that is, the ends of the electrode wires ED3 and ED4) are connected to each other at the connecting portion ED34. For that reason, the diode DT is arranged in the vicinity of the detecting unit 105.

In a case where the detection mode is specified, application of an external force causes the spaced distance among the electrode wires ED1 to ED4 in the first pressure-sensitive detecting member 6-1 to be made smaller. For example, when the electrode wire ED1 comes into contact with the electrode wire ED4, a resistance value between the second end N12 of the electrode wire SNL1 and the second end N22 of the electrode wire SNL2 in the first sensor SN1 becomes smaller. In case of the second sensor SN2 and the third sensor SN3, when the corresponding electrode wires similarly come into contact with each other in the second and third pressure-sensitive detecting members 6-2 and 6-3, resistance values between the second end N12 of the electrode wire SNL1 and the second end N22 of the electrode wire SNL2 in the second sensor SN2 and the third sensor SN3 respectively become smaller.

When there is no external force, the electrode wires ED1 to ED4 are of course spaced from each other. Since the diode DT for the termination resistor is reversely biased, the resistance value between the second end N12 of the electrode wire SNL1 and the second end N22 of the electrode wire SNL2 in each of the sensors SN1 to SN3 becomes larger.

Since each of the first to third pressure-sensitive detecting members 6-1 to 6-3 is the same as a tubular member that is described in Patent Document 1 described above, further explanation of a configuration of each of the first to third pressure-sensitive detecting members 6-1 to 6-3 will be omitted.

As illustrated in FIG. 2, the dummy catch detecting sensor 104 on the side surface 111 of the door 101-A (see FIG. 10(B)) is configured by a base portion 10-1 and a cover member 10. The base portion 10-1 is embedded in the door 101-A. The cover member 10 includes a deformable deforming portion 10-2. This cover member 10 is also formed of rubber in the similar manner to the cover member 5. The deforming portion 10-2 is coupled to the base portion 10-1. A hollow part 12 is formed between the deforming portion 10-2 and the base portion 10-1. Further, a projection portion 11 that projects toward the deforming portion 10-2 is formed on the base portion 10-1.

For example, when an object is caught between the catch detecting sensors 103 and 104, the deforming portion 10-2 is deformed, whereby a shock to the caught object is absorbed. Since the dummy catch detecting sensor 104 does not output a detection signal, the dummy catch detecting sensor 104 can be regarded as an absorbing member installed in the door 101-A.

### <Catch, Pulling Out in Vertical Direction, and Pulling Out in Oblique Direction>

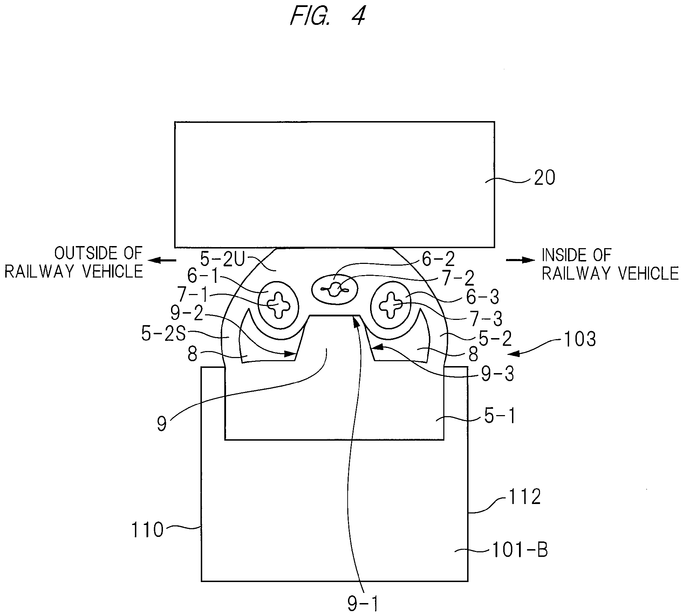

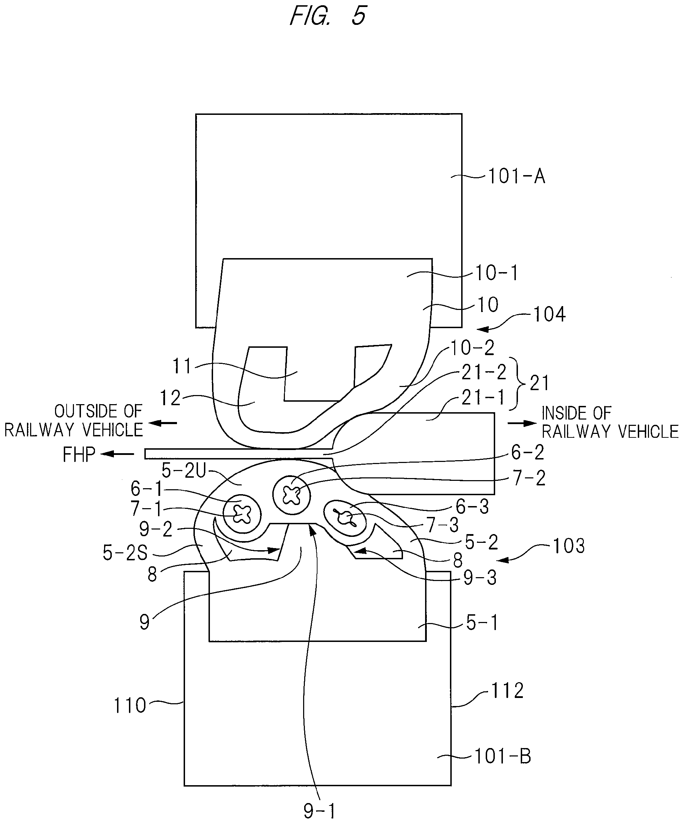

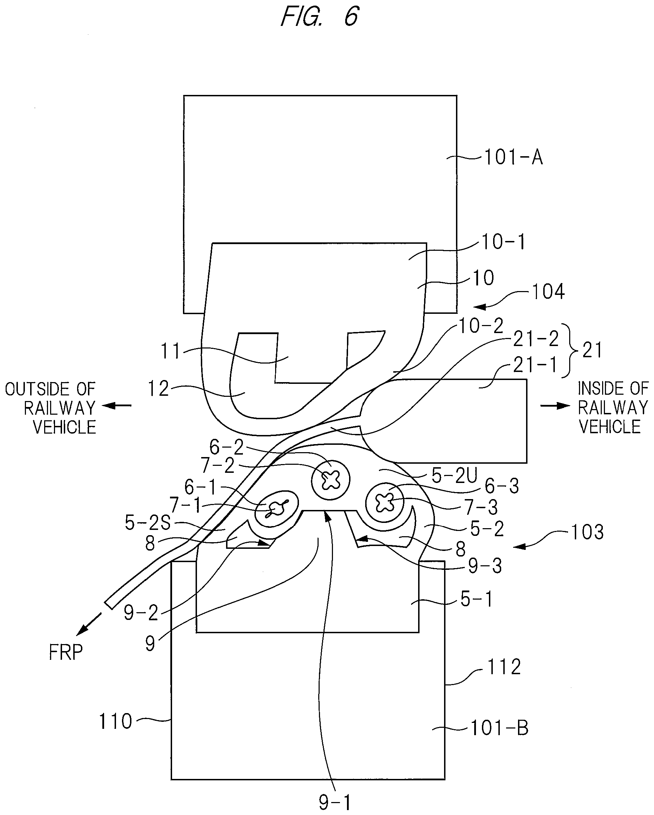

Each of FIG. 4 to FIG. 6 is a cross-sectional view for explaining a state of the catch detecting sensor according to the first embodiment. FIG. 4 illustrates a state of the catch detecting sensor 103 when an object 20 is caught. FIG. 5 illustrates a state of the catch detecting sensor 103 when an object 21 is pulled out in a vertical direction. Further, FIG. 6 illustrates a state of the catch detecting sensor 103 when the object 21 is pulled out in an oblique direction.

### <<Catch>>

A case where an object is caught will first be described. In FIG. 4, a reference numeral 20 denotes an object that is caught between the catch detecting sensors 103 and 104.

By catching the object 20, the deforming portion 5-2 is deformed. In this case, the upper surface deforming portion 5-2U is deformed to move in a direction toward the upper surface 9-1 of the receiving portion 9, and the side surface deforming portion 5-2S is deformed so as to rise in a right-to-left direction in FIG. 4.

When the upper surface deforming portion 5-2U is moved in the direction toward the upper surface 9-1, the second pressure-sensitive detecting member 6-2 is pressed to the upper surface 9-1, which faces the second pressure-sensitive detecting member 6-2, via the cover portion 5-5 (see FIG. 2). This causes the second pressure-sensitive detecting member 6-2 to be deformed so as to be squashed. This causes the electrode wires ED1 to ED4 in the second pressure-sensitive detecting member 6-2 to come into contact with each other. As a result, the resistance value between the second end N12 of the electrode wire SNL1 and the second end N22 of the electrode wire SNL2 in the second sensor SN2 becomes smaller. On the other hand, each of the first and third pressure-sensitive detecting members 6-1 and 6-3 is not squashed yet enough to cause the electrode wires ED1 to ED4 to come into contact with each other. For that reason, the resistance value between the second end N12 of the electrode wire SNL1 and the second end N22 of the electrode wire SNL2 in each of the first sensor SN1 and the third sensor SN3 becomes larger.

### <<Pulling Out in Vertical Direction>>

FIG. 5 illustrates a state when the object 21 whose part is positioned inside the railway vehicle 100 is pulled out. In FIG. 5, an object portion of the object 21, which is positioned inside the railway vehicle 100, is denoted by a reference numeral 21-1, and an object portion of the object 21, which is coupled to the object portion 21-1 and extends outside the railway vehicle 100 is denoted by a reference numeral 21-2. FIG. 5 illustrates a state when an operation to pull out the object portion 21-2 by an external force FHP in a vertical direction with respect to the outer side surface 110 of the door 101-B is carried out.

The object portion 21-1 comes into contact with a right portion of the upper surface deforming portion 5-2U in the deforming portion 5-2 in FIG. 5. This causes the deforming portion 5-2 to be deformed so that the upper surface deforming portion 5-2U is moved in a left direction in FIG. 5 (that is, toward the outside of the railway vehicle 100). Since the upper surface deforming portion 5-2U is deformed so as to be moved toward the outside of the railway vehicle 100, the side surface deforming portion 5-2S is also deformed so as to incline toward the outside of the railway vehicle 100. Herewith, the third pressure-sensitive detecting member 6-3 disposed inside the railway vehicle 100 comes into contact with the second slope 9-3 of the receiving portion 9 as illustrated in FIG. 5. Further, the third pressure-sensitive detecting member 6-3 is pressed to the second slope 9-3 that faces the third pressure-sensitive detecting member 6-3, and is deformed so as to be squashed.

Since the third pressure-sensitive detecting member 6-3 is squashed, the electrode wires ED1 to ED4 thereof come into contact with each other. In the third sensor SN3, the resistance value between the second end N12 of the electrode wire SNL2 and the second end N22 of the electrode wire SNL1 becomes smaller. In this case, each of the first and second pressure-sensitive detecting member 6-1 and 6-2 is not squashed yet enough to cause the electrode wires ED1 to ED4 provided therein to come into contact with each other. For that reason, the resistance value between the second end N12 of the electrode wire SNL1 and the second end N22 of the electrode wire SNL2 in each of the first sensor SN1 and the second sensor SN2 becomes larger.

### <<Pulling Out in Oblique Direction>>

FIG. 6 illustrates a state when the object 21 whose part is positioned inside the railway vehicle 100 is pulled out. The object 21 is the same as that illustrated in FIG. 5. Unless FIG. 5, FIG. 6 illustrates a state when an operation to pull out the object portion 21-2 by an external force FRP in an oblique direction with respect to the outer side surface 110 of the door 101-B is carried out.

In this case, the object portion 21-2 comes into contact with a left portion of the upper surface deforming portion 5-2U in the deforming portion 5-2 in FIG. 6. This causes the deforming portion 5-2 to be deformed so that the upper surface deforming portion 5-2U is moved in a right direction in FIG. 6 (that is, toward the inside of the railway vehicle 100). Since the upper surface deforming portion 5-2U is deformed so as to be moved toward the inside of the railway vehicle 100, the side surface deforming portion 5-2S is also deformed so as to incline toward the inside of the railway vehicle 100. Herewith, the first pressure-sensitive detecting member 6-1 disposed outside the railway vehicle 100 comes into contact with the first slope 9-2 of the receiving portion 9 as illustrated in FIG. 6. Further, the first pressure-sensitive detecting member 6-1 is pressed to the first slope 9-2 that faces the first pressure-sensitive detecting member 6-1, and is deformed so as to be squashed.

Since the first pressure-sensitive detecting member 6-1 is squashed, the resistance value between the second end N12 of the electrode wire SNL1 and the second end N22 of the electrode wire SNL2 in the first sensor SN1 becomes smaller. In this case, each of the second and third pressure-sensitive detecting members 6-2 and 6-3 is not squashed yet enough to cause the electrode wires ED1 to ED4 to come into contact with each other. For that reason, the resistance value between the second end N12 of the electrode wire SNL1 and the second end N22 of the electrode wire SNL2 in each of the second sensor SN2 and the third sensor SN3 becomes larger.

### <Detection Mode and Diagnostic Mode>

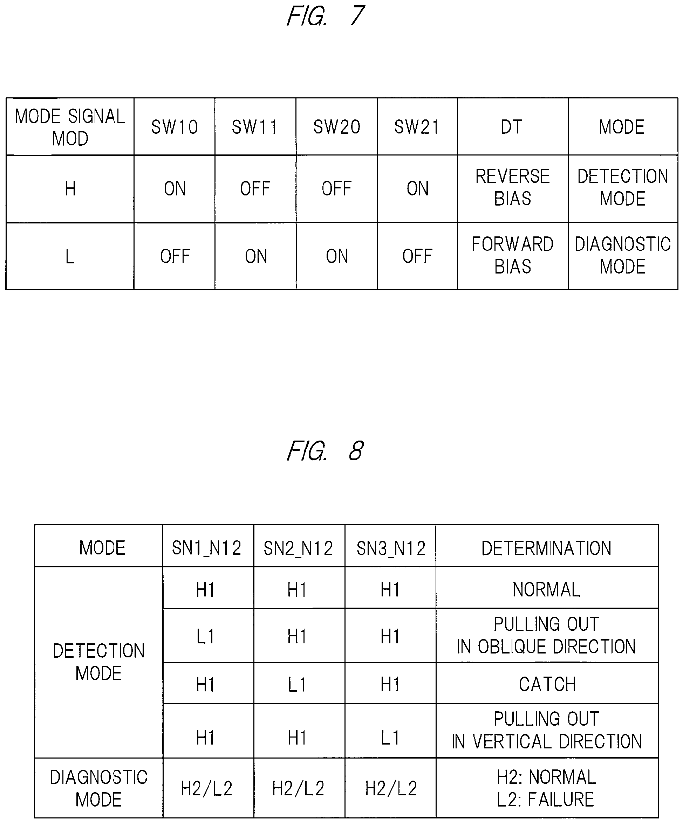

FIG. 7 is a view for explaining an operation of the detector according to the first embodiment. FIG. 7 illustrates a relationship among the mode signal MOD, the first switch SW10 to the fourth switch SW21, the diode DT, and the mode.

By setting the mode signal MOD to the high level, the internal mode signal MODI illustrated in FIG. 1 becomes a high level, and the internal mode signal MODT becomes a low level. This causes the first switch SW10 and the fourth switch SW21 illustrated in FIG. 1 to become the ON state, and causes the second switch SW11 and the third switch SW20 to become the OFF state. As a result, the first voltage Vd is applied to the electrode wire SNL1 via the pull-up resistor R1 and the first switch SW10. On the other hand, the second voltage Vs is applied to the electrode wire SNL2 via the pull-down resistor R2 and the fourth switch SW21. The second voltage Vs is a ground voltage GND, and the first voltage Vd is a voltage higher than the second voltage Vs. Therefore, in a case where disconnection does not occur in the electrode wires SNL1 and SNL2 (that is, the electrode wires ED1 to ED4), a higher voltage is applied to the cathode of the diode DT compared with the anode of the diode DT, whereby the diode DT becomes a state of a reverse bias in which a current (that is, a current in a forward direction) does not flow into the diode DT.

As a result, the electrode wires SNL1 and SNL2 are connected to each other by the diode DT with a high-resistance state. Thus, the resistance value between the second end N12 of the electrode wire SNL1 and the second end N22 of the electrode wire SNL2 becomes larger. Therefore, a voltage at the second end N12 of the electrode wire SNL1 becomes substantially the same voltage as the first voltage Vd. This state is the detection mode.

By setting the mode signal MOD to the low level, the internal mode signal MODI illustrated in FIG. 1 becomes a low level, and the internal mode signal MODT becomes a high level. This causes the second switch SW11 and the third switch SW20 illustrated in FIG. 1 to become the ON state, and caused the first switch SW10 and the fourth switch SW21 to become the OFF state. As a result, the second voltage Vs is applied to the electrode wire SNL1 via the pull-up resistor R1 and the second switch SW11. On the other hand, the first voltage Vd is applied to the electrode wire SNL2 via the pull-down resistor R2 and the third switch SW20. Therefore, in a case where disconnection does not occur in the electrode wires SNL1 and SNL2 (that is, the electrode wires ED1 to ED4), a higher voltage is applied to the anode of the diode DT compared with the cathode of the diode DT, whereby the diode DT becomes a state of forward bias in which a current flows into the diode DT in the forward direction.

As a result, the voltage at the second end N12 of the electrode wire SNL1 becomes substantially the same voltage as the second voltage Vs. This state is the diagnostic mode.

### <Determination of Detection Mode or Diagnostic Mode>

Next, determination by the detection mode and the diagnostic mode will be described. FIG. 8 is a view for explaining determination in each of the detection mode and the diagnostic mode according to the first embodiment. In FIG. 8, SN_N12 denotes the voltage at the second end N12 of the electrode wire SNL1 in the first sensor SN1 illustrated in FIG. 1; SN2_N12 denotes the voltage at the second end N12 of the electrode wire SNL1 in the second sensor SN2; and SN3_N13 denotes the voltage at the second end N12 of the electrode wire SNL1 in the third sensor SN3. Since the voltages SN1_N12 to SN3_N12 are respectively outputs of the first sensor SN1 to the third sensor SN3, the voltages SN1_N12 to SN3_N12 is hereinafter referred to as "output voltages".

In order to facilitate understanding of the following explanation, the first voltage Vd illustrated in FIG. 1 is set to 5 (V), the second voltage Vs is set to 0 (V), the pull-up resistor R1 is set to 10 (KΩ), and the pull-down resistor R2 is set to 1 (KQ) . Further, voltage drop by the diode DT for the termination resistor at the time of forward bias is 0.3 (V).

### <<Determination by Detection Mode>>

In a case where the detection mode is specified and disconnection in both the electrode wires SNL1 and SNL2 does not occur, the diode DT for the termination resistor becomes a state of reverse bias as described above.

In a case where a catch or pulling out of an object does not occur, as illustrated in FIG. 4, the first to third pressure-sensitive detecting members 6-1 to 6-3 are not squashed due to external pressure. For this reason, the electrode wires SNL1 and SNL2 does not come into contact with each other in any of the first sensor SN1 to the third sensor SN3. In this case, the first voltage Vd of 5 (V) is applied to the second end N12 of the electrode wire SNL1 via the pull-up resistor R1 and the first switch SW10. Since the diode DT for the termination resistor is in a state of the reverse bias, the respective output voltages SN1_N12 to SN3_N12 of the first sensor SN1 to the third sensor SN3 become a voltage H1 that is substantially the same as the first voltage Vd of 5 (V) .

The voltage detecting circuit 2 determines a normal state in which any of a catch and pulling out does not occur in a case where all of the output voltages SN1_N12 to SN3_N12 are the voltage H1. The voltage detecting circuit 2 then outputs "normal" as the detection signal DSEN.

As illustrated in FIG. 4, when a catch occurs, the second pressure-sensitive detecting member 6-2 is squashed, whereby the electrode wires SNL1 and SNL2 come into contact with each other. In this case, in the second sensor SN2, the pull-up resistor R1 and the pull-down resistor R2 illustrated in FIG. 1 are connected in series between the first voltage Vd and the second voltage Vs. In this case, the output voltage SN2_N12 of the second sensor SN2 becomes about 0.45 (V) by a formula of "Vd × R2 / (R1 + R2) =5 × 1 / (10 + 1) = about 0.45 (V)". This voltage of 0.45 (V) is denoted as a voltage L1 in FIG. 8.

In FIG. 8, a combination in a case where the output voltage SN1_N12 of the first sensor SN1 and the output voltage SN3_N12 of the third sensor SN3 are the voltage H1 and the output voltage SN2_N of the second sensor SN2 is the voltage L1 corresponds to a state where the first pressure-sensitive detecting member 6-1 and the third pressure-sensitive detecting member 6-3 are not squashed and the second pressure-sensitive detecting member 6-2 is squashed. Namely, this combination of the output voltages denotes the state of the catch, which has been explained with reference to FIG. 4. Therefore, the voltage detecting circuit 2 determines a state of the catch at the time of this combination of the output voltages, and outputs the detection signal DSEN that indicates the "catch".

Further, a combination in a case where the output voltage SN1 N12 of the first sensor SN1 is the voltage L1 and the output voltages SN2_N12 and SN3_N12 of the second sensor SN2 and the third sensor SN3 are the voltage H1 denotes a case where the first pressure-sensitive detecting member 6-1 is squashed and the second and third pressure-sensitive detecting members 6-2 and 6-3 are not squashed as explained above with reference to FIG. 6. Therefore, the voltage detecting circuit 2 determines a state where the pulling out in the oblique direction occurs at the time of this combination of the output voltages, and outputs the detection signal DSEN that indicates "the pulling out in the oblique direction".

Moreover, a combination in a case where the output voltage SN3_N12 of the third sensor SN3 is the voltage L1 and the output voltages SN1_N12 and SN2_N12 of the first sensor SN1 and the second sensor SN2 are the voltage H1 denotes a case where the third pressure-sensitive detecting member 6-3 is squashed and the first and the second pressure-sensitive detecting members 6-1 and 6-2 are not squashed as explained above with reference to FIG. 5. Therefore, the voltage detecting circuit 2 determines a state where the pulling out in the vertical direction occurs at the time of this combination of the output voltages, and outputs the detection signal DSEN that indicates "the pulling out in the vertical direction".

### <<Determination by Diagnostic Mode>>

In the diagnostic mode, as illustrated in FIG. 7, each of the second switch SW11 and the third switch SW20 is set to the ON state. This causes the diode DT for the termination resistor to be biased in a forward direction. For example, in a case where a short circuit between the electrode wires SNL1 and SNL2 does not occur in the second sensor SN2 and disconnection in both the electrode wires SNL1 and SNL2 does not occur, the output voltage SN2_N12 of the second sensor SN2 becomes about 4.27 (V) by a formula of "(Vd - 0.3 (V)) × R1 / (R1 + R2) = (5 - 0.3) × 10 / (10 + 1) = about 4.27 (V)". This voltage of 4.27 (V) is denoted as a voltage H2 in FIG. 8. Note that in the above formula, a voltage of 0.3 (V) is a voltage that is generated by the voltage drop of the diode DT as described above.

On the other hand, for example, in a case where disconnection in the electrode wire SNL1 or SNL2 occurs in the second sensor SN2, no current flows between the second end N12 of the electrode wire SNL1 and the second end N22 of the electrode wire SNL2. As a result, a voltage of the output voltage SN2_N12 in the second sensor SN2 becomes substantially the same voltage L2 as the second voltage Vs of 0 (V).

The voltage detecting circuit 2 determines whether each of the output voltages SN1_N12 to SN3_N12 of the first sensor SN1 to the third sensor SN3 is the voltage H2 or the voltage L2, and outputs a determination result as the diagnostic signal FAIL. Namely, the voltage detecting circuit 2 notifies the operating/informing unit 107 of a sensor or sensors whose output voltage is the voltage L2 by means of the diagnostic signal FAIL that indicates a failure (presence or absence of disconnection). In a case where even one of the three sensors outputs the voltage L2 in the diagnostic mode, the voltage detecting circuit 2 may notify the operating/informing unit 107 that the catch detecting sensor 103 is failed by means of the diagnostic signal FAIL.

In a case where the electrode wires SNL1 and SNL2 are short-circuited, the voltage drop generated by the diode DT for the termination resistor is removed from the above formula. For example, the output voltage SN2_N12 of the second sensor SN2 becomes about 4.54 (V). The voltage detecting circuit 2 may determine this voltage, and notify the operating/informing unit 107 of a failure (herein, a short circuit) by outputting the diagnostic signal FAIL that indicates a failure related to a short circuit.

### (Second Embodiment)

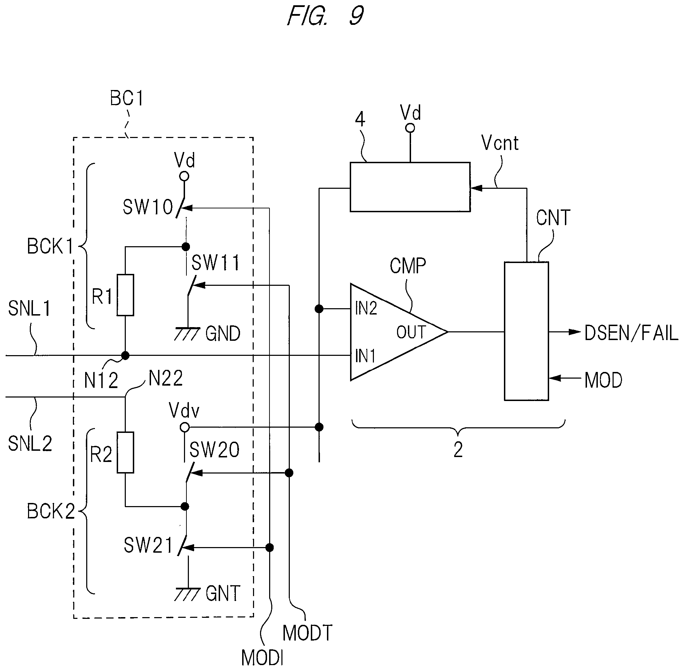

FIG. 9 is a block diagram illustrating a configuration of a detecting unit according to a second embodiment. In the second embodiment, when a diagnostic mode is specified, a voltage to be applied to electrode wires SNL1 and SNL2 varies with a lapse of time. Herewith, in a case where disconnection does not occur, an output voltage that varies with a lapse of time is applied to a voltage detecting circuit 2 from first to third sensors SN1 to SN3. On the other hand, in a case where disconnection occurs, the output voltage applied to the voltage detecting circuit 2 becomes a second voltage V2 (L2) that does not vary temporally. For this reason, the voltage detecting circuit 2 can determine whether a failure of disconnection occurs or not by determining whether the output voltage of each of the sensors SN1 to SN3 varies temporally or not.

Next, the detecting unit according to the second embodiment will be described more specifically. A comparison circuit CMP and a voltage variable circuit 4 are added to the voltage detecting circuit 2 according to the second embodiment with respect to the voltage detecting circuit 2 according to the first embodiment. When a voltage control signal Vent with a high level is supplied to the voltage variable circuit 4 from a control unit CNT, for example, the voltage variable circuit 4 outputs, as a voltage Vdv, a third voltage (variable voltage) whose voltage value varies temporally on the basis of a first voltage Vd to be applied. On the other hand, when the voltage control signal Vent is in a low level, the voltage variable circuit 4 outputs the first voltage Vd to be applied as the voltage Vdv.

The voltage Vdv outputted from the voltage variable circuit 4 is applied to a second bias circuit BCK2 instead of the first voltage Vd. Note that the first voltage Vd is applied to a first bias circuit BCK1 in the similar manner to the first embodiment.

The comparison circuit CMP includes an input terminal IN1, an input terminal IN2, and an output terminal OUT. The input terminal IN1 is connected to a second end N12 of an electrode wire SNL1. The voltage Vdv is applied to the input terminal IN2 from the voltage variable circuit 4. The comparison circuit CMP is configured to output an output voltage from the output terminal OUT. This output voltage corresponds to a difference between a voltage at the input terminal IN1 and a voltage at the input terminal IN2.

The output voltage from the comparison circuit CMP is applied to the control unit CNT. A mode signal MOD is also supplied to the control unit CNT. When the mode signal MOD specifies the diagnostic mode, the control unit CNT sets the voltage control signal Vent to the high level. When the mode signal MOD specifies a detection mode, the control unit CNT sets the voltage control signal Vent to the low level. Herewith, in the diagnostic mode, the voltage Vdv whose voltage value varies temporally is applied to the comparison circuit CMP and the second bias circuit BCK2 from the voltage variable circuit 4. On the other hand, in the detection mode, the voltage Vdv whose voltage value does not vary temporally is applied to the comparison circuit CMP and the second bias circuit BCK2 from the voltage variable circuit 4.

In a case where disconnection does not occur in the diagnostic mode, a voltage at the second end N12 of the electrode wire SNL1 becomes a voltage value obtained by dividing a voltage, which is obtained by subtracting voltage drop of a diode DT from the voltage Vdv, by means of a voltage dividing circuit configured by a pull-up resistor R1 and a pull-down resistor R2. Since the voltage value of the voltage Vdv varies temporally, the divided voltage at the second end N12 also varies so as to synchronize with the temporal variation of the voltage Vdv.

In a case where disconnection does not occur in the diagnostic mode, the voltages at the input terminals IN1 and IN2 of the comparison circuit CMP also vary so as to synchronize with each other. For this reason, a voltage value of the output voltage outputted from the comparison circuit CMP does not vary temporally. In a case where the pull-up resistor R1 is 10 (KΩ), the pull-down resistor R2 is 1 (KΩ), and the voltage drop of the diode DT is 0.3 (V) in the similar manner to that according to the first embodiment, a voltage difference between the input terminals IN1 and IN2 becomes a predetermined voltage difference (about 0.73 (V)) even though the voltage Vdv varies.

On the other hand, in a case where disconnection occurs in the electrode wire SNL1 or SNL2, a second voltage Vs is applied to the input terminal IN1 of the comparison circuit CMP. For this reason, the voltage difference between the input terminals IN1 and IN2 becomes larger, and the voltage difference varies with a lapse of time.

The control unit CNT determines whether the output voltage of the comparison circuit CMP is a value based on the predetermined voltage difference described above or varies with a lapse of time. In a case where the output voltage of the comparison circuit CMP is the value based on the predetermined voltage difference, the control unit CNT determines that disconnection does not occur in the first sensor SN1. On the other hand, in a case where the output voltage of the comparison circuit CMP varies with a lapse of time, the control unit CNT determines that disconnection occurs in the first sensor SN1.

Its illustration is omitted in FIG. 9. However, a comparison circuit CMP similar to that in the first sensor SN1 is also provided in each of the second sensor SN2 and the third sensor SN3. The control unit CNT determines whether disconnection occurs in each of the second sensor SN2 and the third sensor SN3 or not on the basis of output voltages of the comparison circuits CMP in the second sensor SN2 and the third sensor SN3. The control unit CNT outputs a determination result as a diagnostic signal FAIL.

In a case where the detection mode is specified, the control unit CNT outputs, as a detection signal DSEN, a state corresponding to a combination of the output voltages of the respective comparison circuits CMP in the first sensor SN1 to the third sensor SN3.

### <Low Power Consumption>

In the first and the second embodiments, the pair of electrode wires SNL1 and SNL2 constituting each sensor is connected via a unidirectional element. The unidirectional element serves as a termination resistor in the detection mode. This makes it possible to improve resistance to noise, and to make power consumption lower.

A given configuration is considered as a comparative example. In this configuration, a pull-up resistor R1 is connected between an electrode wire SNL1 and a first voltage Vd, a pull-down resistor R2 is connected between an electrode wire SNL2 and a ground voltage GND, and a termination resistor R3 is connected between the electrode wires SNL1 and SNL2. In this case, resistance values of the pull-up resistor R1, the pull-down resistor R2, and the termination resistor R3 are the same resistance value R as each other. This also makes it possible to detect a catch and disconnection in each of the electrode wires SNL1 and SNL2 in the detection mode.

Namely, in a case where the electrode wires SNL1 and SNL2 come into contact with each other by an external force, a voltage of the electrode wire SNL1 is defined by a voltage dividing circuit configured by the resistors R1 and R2 (that is, Vd/2R) . On the other hand, in a case where the electrode wires SNL1 and SNL2 does not come into contact with each other, the voltage of the electrode wire SNL1 is defined by a voltage dividing circuit configured by the resistors R1, R2, and R3 (that is, Vd/3R) . Therefore, it is possible to detect a catch on the basis of the voltage of the electrode wire SNL1. Further, in a case where disconnection occurs in the electrode wire SNL1 or SNL2, the voltage of the electrode wire SNL1 becomes the first voltage Vd. Therefore, the voltage of the electrode wire SNL1 when disconnection occurs can be set to a voltage different from the voltages defined by presence or absence of a catch. This makes it possible to detect occurrence of disconnection.

However, in order to suppress the voltage of the electrode wire SNL1 or SNL2 from varying due to an influence of noise, the resistance value R described above is required to be made smaller. If the resistance value R is made smaller, a current that usually flows in each of the pull-up resistor R1, the termination resistor R3, and the pull-down resistor R2. This causes power consumption to be increased.

In the first and the second embodiments, the unidirectional element is reversely biased in the detection mode so that the current flowing in the unidirectional element becomes fewer. This makes it possible to cause power consumption to become lower in the detection mode. On the other hand, the current flowing in the unidirectional element increases in the diagnostic mode. However, the diagnostic mode may be specified only when needed. Thus, it is possible to suppress power consumption from being increased. Moreover, it is possible to lower a voltage to be applied to a series circuit configured by the pull-up resistor R1 and the pull-down resistor R2 in the diagnostic mode in accordance with voltage drop of the unidirectional element. This makes it possible to suppress a current from being consumed.

According to the first and the second embodiments, as described above, it is also possible to determine a failure related to a short circuit. However, determination of a short circuit is to be executed on the basis of a small voltage corresponding to the voltage drop generated by the diode DT. In order to inspect or examine both a short circuit and disconnection in an electrode wire more precisely, it is desirable to combine the detection mode and the diagnostic mode, which have been described in the first and the second embodiments. In this case, it is desirable that inspection may be executed after it is confirmed that any object is not caught between doors. By specifying the diagnostic mode in the inspection as explained above on the basis of the embodiments, it is possible to determine whether disconnection occurs in an electrode wire or not. Further, by specifying the detection mode in the inspection, it is possible to determine presence or absence of a short circuit of the electrode wire. Namely, in a case where any of the output voltages SN1_N12 to SN3_N12 (see FIG. 8) of the sensors SN1 to SN3 becomes the voltage L1 in spite of the fact that any object is not caught between the doors, it is possible to determine that a short circuit occurs in an electrode wire in a sensor that outputs the voltage L1.

In the first and the second embodiments, the case where one catch detecting sensor 103 includes three pressure-sensitive detecting members, that is, three sensors, has been described. However, the number of pressure-sensitive detecting members (or sensors) included in the catch detecting sensor 103 may be less than three or equal to or more than four.

As explained above, the present invention made by the inventors has been concretely described on the basis of the embodiments. However, the present invention is not limited to the embodiments described above, and it goes without saying that various modifications can be made without departing from the scope of the appended claims.

## Claims

1. A detector comprising:
a catch detecting sensor (103) detecting a caught object, the catch detecting sensor having a deformable cover member installable on a side surface (111) of a door of a vehicle, the deformable cover member being configured to cover a plurality of detecting members of the catch detecting sensor (103); and
a detecting unit (105) connected to the catch detecting sensor (103), the detecting unit (105) being configured to output a detection signal based on a result detected by the catch detecting sensor (103) when a detection mode is specified, the detecting unit being configured to output a diagnostic signal based on a failure of the catch detecting sensor when a diagnostic mode is specified,
wherein each of the plurality of detecting members (SN1) includes a pair of electrode wires (SNL1, SNL2) that extends in an extending direction of the catch detecting sensor (103), first ends (N11, N21) of the pair of electrode wires (SNL1, SNL2 being connected to each other via a unidirectional element, the plurality of detecting members being composed of a second pressure-sensitive detecting member disposed on a center line of the deformable cover member, a first pressure-sensitive detecting member located at an inside of the vehicle with respect to the center line, and a third pressure-sensitive detecting member located at an outside of the vehicle with respect to the center line,
wherein the detecting unit (105) is connected to each of second ends (N12, N22) of the pair of electrode wires (SNL1, SNL2), the detecting unit (105) being configured to output a diagnostic signal based on presence or absence of disconnection in the pair of electrode wires (SNL1, SNL2) when the diagnostic mode is specified,
wherein the detecting unit (105) includes:
a detecting circuit (2) connected to one electrode wire (SNL1) of the pair of electrode wires;
a bias circuit (BC1, BC2, BC3) in respect of each pressure-sensitive detecting member, each bias circuit including a first and second bias circuit (BCK1, BCK2);
the first bias circuit (BCK1) connected to the second end (N12) of one electrode wire (SNL1) of the pair of electrode wires (SNL1, SNL2), the first bias circuit (BCK1) being configured to apply a first voltage (Vd) or a second voltage (Vs) to the second end (N12) of the one electrode wire (SNL1);
the second bias circuit (BCK2) connected to the second end (N22) of the other electrode wire (SNL2) of the pair of electrode wires (SNL1, SNL2), the second bias circuit (BCK2) being configured to apply the second voltage (Vs) or the first voltage (Vd) to the second end (N22) of the other electrode wire (SNL2); and
a mode switching circuit (3) configured to control the first bias circuit (BCK1) and second bias circuit (BCK2) in accordance with a mode signal for specifying any of the detection mode and the diagnostic mode,
wherein during the detection mode, the first bias circuit (BCK1) and second bias circuit (BCK2) respectively apply voltages to the pair of electrode wires (SNL1, SNL2) so that the unidirectional element is biased in a reverse direction, and
wherein during the diagnostic mode, the first bias circuit (BCK1) and second bias circuit (BCK2) respectively apply voltages to the pair of electrode wires (SNL1, SNL2) so that the unidirectional element is biased in a forward direction,
wherein the first bias circuit (BCK1) includes:
a first switch (SW10) and a second switch (SW11) connected in series between the first voltage (Vd) and the second voltage (Vs); and
a first resistive element (R1) connected between a connection node and the second end (N12) of the one electrode wire (SNL1), the first switch (SW10) being connected to the second switch (SW11) at the connection node,
wherein the second bias circuit (BCK2) includes:
a third switch (SW20) and a fourth switch (SW21) connected in series between the second voltage (Vs) and the first voltage (Vd); and
a second resistive element (R2) connected between a connection node and the second end (N22) of the other electrode wire (SNL2), the third switch (SW20) being connected to the fourth switch (SW21) at the connection node,
wherein the first resistive element is a pull-up resistor,
wherein the second resistive element is a pull-down resistor,
wherein the detecting unit is configured to determine a state in which an object is caught, a state in which an object is pulled out in a direction perpendicular to an outer side surface (110) or an inner side surface (112) of the door, and a state in which an object is pulled out in a direction oblique with respect to the outer side surface or the inner side surface of the door, based on a combination of output voltages from the first pressure-sensitive detecting member, the second pressure-sensitive detecting member, and the third pressure-sensitive detecting member.

2. The detector according to claim 1,
wherein in accordance with the mode signal, the mode switching circuit is configured to control the first switch (SW10) and the second switch (SW11) into an ON state in a complementary manner, and control the third switch (SW20) and the fourth switch (SW21) into an ON state in a complementary manner.

3. The detector according to claim 2,
wherein the detecting circuit (2) includes a comparison circuit (CMP) provided with an input terminal (IN1) connected to the one electrode wire (SNL1) and an input terminal (IN2) to which the first voltage (Vd) is applied, and
wherein the first voltage is a variable voltage to be applied from a voltage variable circuit (4).

4. The detector according to claim 1,
wherein each of the plurality of detecting members includes four electrode wires that are spaced from each other, and
wherein each of the pair of electrode wires is configured by connecting two electrode wires of the four electrode wires to each other.

## Patentansprüche

1. Detektor, umfassend:
einen Fangdetektionssensor (103), der ein gefangenes Objekt detektiert, wobei der Fangdetektionssensor ein verformbares Abdeckungselement hat, das an einer Seitenfläche (111) einer Tür eines Fahrzeugs installierbar ist, wobei das verformbare Abdeckungselement so konfiguriert ist, dass es eine Mehrzahl von Detektionselementen des Fangdetektionssensors (103) abdeckt; und
eine Detektionseinheit (105), die mit dem Fangdetektionssensor(103) verbunden ist, wobei die Detektionseinheit (105) so konfiguriert ist, dass sie ein Detektionssignal auf der Grundlage eines von dem Fangdetektionssensor (103) erfassten Ergebnisses ausgibt, wenn ein Detektionsmodus spezifiziert ist, wobei die Detektionseinheit so konfiguriert ist, dass sie ein Diagnosesignal auf der Grundlage eines Fehlers des Fangdetektionssensors ausgibt, wenn ein Diagnosemodus spezifiziert ist,
wobei jedes der Mehrzahl von Detektionselementen (SN1) ein Paar von Elektrodendrähten (SNL1, SNL2) umfasst, das sich in einer Erstreckungsrichtung des FangDetektionssensors (103) erstreckt, wobei erste Enden (N11, N21) des Paars von Elektrodendrähten (SNLl, SNL2) über ein unidirektionales Element miteinander verbunden sind, wobei die Mehrzahl von Detektionselementen aus einem zweiten druckempfindlichen Detektionselement gebildet ist, das auf einer Mittellinie des verformbaren Abdeckelements angeordnet ist, einem ersten druckempfindlichen Detektionselement, das an einer Innenseite des Fahrzeugs in Bezug auf die Mittellinie angeordnet ist, und einem dritten druckempfindlichen Detektionselement, das an einer Außenseite des Fahrzeugs in Bezug auf die Mittellinie angeordnet ist,
wobei die Detektionseinheit (105) mit jedem von zweiten Enden (Nl2, N22) des Paares von Elektrodendrähten (SNLl, SNL2) verbunden ist, wobei die Detektionseinheit (105) so konfiguriert ist, dass sie ein Diagnosesignal auf der Grundlage des Vorhandenseins oder der Abwesenheit einer Unterbrechung in dem Paar von Elektrodendrähten (SNLl, SNL2) ausgibt, wenn der Diagnosemodus spezifiziert ist,
wobei die Detektionseinheit (105) beinhaltet:
eine Detektionsschaltung (2), die mit einem Elektrodendraht (SNLl) des Paares von Elektrodendrähten verbunden ist,
eine Vorspannungsschaltung (BC1, BC2, BC3) in Bezug auf jedes druckempfindliche Detektionselement, wobei jede Vorspannungsschaltung eine erste und eine zweite Vorspannungsschaltung (BCK1, BCK2) umfasst,
wobei die erste Vorspannungsschaltung (BCK1) mit dem zweiten Ende (N12) eines Elektrodendrahtes (SNL1) des Paares von Elektrodendrähten (SNL1, SNL2) verbunden ist, wobei die erste Vorspannungsschaltung (BCK1) dazu konfiguriert ist, eine erste Spannung (Vd) oder eine zweite Spannung (Vs) an das zweite Ende (N12) des einen Elektrodendrahtes (SNL1) anzulegen;
wobei die zweite Vorspannungsschaltung (BCK2) mit dem zweiten Ende (N22) des anderen Elektrodendrahtes (SNL2) des Paares von Elektrodendrähten (SNL1, SNL2) verbunden ist, wobei die zweite Vorspannungsschaltung (BCK2) dazu konfiguriert ist, die zweite Spannung (Vs) oder die erste Spannung (Vd) an das zweite Ende (N22) des anderen Elektrodendrahtes (SNL2) anzulegen; und
einen Modusumschaltkreis (3), der so konfiguriert ist, dass er die erste Vorspannungsschaltung (BCK1) und die zweite Vorspannungsschaltung (BCK2) in Übereinstimmung mit einem Modussignal steuert, um irgendeinem von dem Detektionsmodus oder dem Diagnosemodus zu spezifizieren,
wobei während des Detektionsmodus die erste Vorspannungsschaltung (BCK1) und die zweite Vorspannungsschaltung (BCK2) jeweils Spannungen an das Paar von Elektrodendrähten (SNLl, SNL2) derart anlegen, dass das unidirektionale Element in einer umgekehrten Richtung vorgespannt wird, und
wobei während des Diagnosemodus die erste Vorspannungsschaltung (BCK1) und die zweite Vorspannungsschaltung (BCK2) jeweils Spannungen an das Paar von Elektrodendrähten (SNL1, SNL2) derart anlegen, dass das unidirektionale Element in einer Vorwärtsrichtung vorgespannt wird,
wobei die erste Vorspannungsschaltung (BCK1) Folgendes beinhaltet:
einen ersten Schalter (SW10) und einen zweiten Schalter (SW11), die in Reihe zwischen der ersten Spannung (Vd) und der zweiten Spannung (Vs) verbunden sind, und
ein erstes Widerstandselement (R1), das zwischen einem Verbindungsknoten und dem zweiten Ende (N12) des einen Elektrodendrahtes (SNL1) verbunden ist, wobei der erste Schalter (SW10) mit dem zweiten Schalter (SW11) am Verbindungsknoten verbunden ist,
wobei die zweite Vorspannungsschaltung (BCK2) Folgendes beinhaltet:
einen dritten Schalter (SW20) und einen vierten Schalter (SW21) die in Reihe zwischen der zweiten Spannung (Vs) und der ersten Spannung (Vd) verbunden sind, und
ein zweites Widerstandselement (R2), das zwischen einen Verbindungsknoten und das zweite Ende (N22) des anderen Elektrodendrahts (SNL2) verbunden ist, wobei der dritte Schalter (SW20) mit dem vierten Schalter (SW21) am Verbindungsknoten verbunden ist
wobei das erste Widerstandselement ein Pull-up-Widerstand ist,
wobei das zweite Widerstandselement ein Pull-down-Widerstand ist,
wobei die Detektionseinheit dazu konfiguriert ist, einen Zustand zu bestimmen,
in dem ein Objekt gefangen ist, einen Zustand, in dem ein Objekt in einer Richtung orthogonal zu einer äußeren Seitenfläche (110) oder einer inneren Seitenfläche (112) der Tür herausgezogen wird, und einen Zustand, in dem ein Objekt in einer Richtung schräg in Bezug auf die äußere Seitenfläche oder die innere Seitenfläche der Tür herausgezogen wird, auf der Grundlage einer Kombination von Ausgangsspannungen von dem ersten druckempfindlichen Detektionselement, dem zweiten druckempfindlichen Detektionselement und dem dritten druckempfindlichen Detektionselement.

2. Detektor nach Anspruch 1,
wobei in Übereinstimmung mit dem Modussignal der Modusschaltkreis so konfiguriert ist, dass er den ersten Schalter (SW10) und den zweiten Schalter (SW11) auf komplementäre Weise in einen EIN-Zustand steuert, und den dritten Schalter (SW20) und den vierten Schalter (SW21) auf komplementäre Weise in einen EIN-Zustand steuert.

3. Detektor nach Anspruch 2,
wobei die Detektionsschaltung (2) eine Vergleichsschaltung (CMP) enthält, die mit einer Eingangsklemme (IN1) versehen ist, die mit dem einen Elektrodendraht (SNL1) verbunden ist, und einer Eingangsklemme (IN2), an die die erste Spannung (Vd) angelegt wird, und
wobei die erste Spannung eine variable Spannung ist, die von einer spannungsvariablen Schaltung (4) angelegt werden soll.

4. Detektor nach Anspruch 1,
wobei jedes von der Mehrzahl von Detektionselementen vier Elektrodendrähte umfasst, die voneinander entfernt sind, und
wobei jedes des Paares von Elektrodendrähten durch das Verbinden von zwei Elektrodendrähten der vier Elektrodendrähte miteinander konfiguriert ist.

## Revendications

1. Détecteur comprenant :
un capteur (103) de détection de prise détectant un objet pris, le capteur de détection de prise ayant un élément de couvercle déformable pouvant être monté sur une surface (111) latérale d'une porte d'un véhicule, l'élément de couvercle déformable étant configuré pour recouvrir une pluralité d'éléments de détection du capteur (103) de détection de prise ; et
une unité (105) de détection connectée au capteur (103) de détection de prise, l'unité (105) de détection étant configurée pour donner un signal de détection sur la base d'un résultat détecté par le capteur (103) de détection de prise lorsqu'un mode de détection est précisé, l'unité de détection étant configurée pour donner un signal de diagnostic sur la base d'une défaillance du capteur de détection de prise lorsqu'un mode de diagnostic est précisé,
dans lequel chacun de la pluralité d'éléments (SN1) de détection comprend une paire de fils (SNL1, SNL2) d'électrode, qui s'étend dans une direction d'étendue du capteur (103) de détection de prise, des premiers bouts (N11, N21) de la paire de fils (SNL1, SNL2) d'électrode étant connectés l'un à l'autre par un élément unidirectionnel, la pluralité d'éléments de détection étant composée d'un deuxième élément de détection sensible à la pression disposé sur une ligne centrale de l'élément de couvercle déformable, d'un premier élément de détection sensible à la pression disposé à l'intérieur du véhicule par rapport à la ligne centrale et d'un troisième élément de détection sensible à la pression disposé à l'extérieur du véhicule par rapport à la ligne centrale,
dans lequel l'unité (105) de détection est connectée à chacun des deuxièmes bouts (N12, N22) de la paire de fils (SNL1, SNL2) d'électrode, l'unité (105) de détection étant configurée pour donner un signal de diagnostic sur la base de la présence ou de l'absence de déconnexion dans la paire de fils (SNL1, SNL2) d'électrode lorsque le mode de diagnostic est précisé,
dans lequel l'unité (105) de détection comprend :
un circuit (2) de détection connecté à l'un des fils (SNL1) d'électrode de la paire de fils d'électrode ;
un circuit (BC1, BC2, BC3) de polarisation en rapport à chaque élément de détection sensible à la pression, chaque circuit de polarisation comprenant un premier et un deuxième circuits (BCK1, BCK2) de polarisation ;
le premier circuit (BCK1) de polarisation est connecté au deuxième bout (N12) du un fil (SNL1) d'électrode de la paire de fils (SNL1, SNL2) d'électrode, le premier circuit (BCK1) de polarisation étant configuré pour appliquer une première tension (Vd) ou une deuxième tension (Vs) au deuxième bout (N12) du un fil (SNL1) d'électrode ;
le deuxième circuit (BCK2) de polarisation est connecté au deuxième bout (N22) de l'autre fil (SNL2) d'électrode de la paire de fils (SNL1, SNL2) d'électrode, le deuxième circuit (BCK2) de polarisation étant configuré pour appliquer la deuxième tension (Vs) ou la première tension (Vd) au deuxième bout (N22) de l'autre fil (SNL2) d'électrode ; et
un circuit (3) de commutation de mode configuré pour commander le premier circuit (BCK1) de polarisation et le deuxième circuit (BCK2) de polarisation en fonction d'un signal de mode pour préciser l'un quelconque du mode de détection et du mode de diagnostic,
dans lequel pendant le mode de détection, le premier circuit (BCK1) de polarisation et le deuxième circuit (BCK2) de polarisation appliquent respectivement des tensions à la paire de fils (SNL1, SNL2) d'électrode de manière à ce que l'élément unidirectionnel soit polarisé dans un sens inverse, et
dans lequel pendant le mode de diagnostic, le premier circuit (BCK1) de polarisation et le deuxième circuit (BCK2) de polarisation appliquent respectivement des tensions à la paire de fils (SNL1, SNL2) d'électrode de manière à ce que l'élément unidirectionnel soit polarisé dans un sens direct,
dans lequel le premier circuit (BCK1) de polarisation comprend :
un premier interrupteur (SW10) et un deuxième interrupteur (SW11) montés en série entre la première tension (Vd) et la deuxième tension (Vs) ; et
un premier élément (R1) résistant monté entre un noeud de connexion et le deuxième bout (N12) du un fil (SNL1) d'électrode, le premier interrupteur (SW10) étant connecté au deuxième interrupteur (SW11) au noeud de connexion,
dans lequel le deuxième circuit (BCK2) de polarisation comprend :
un troisième interrupteur (SW20) et un quatrième interrupteur (SW21) montés en série entre la deuxième tension (Vs) et la première tension (Vd); et
un deuxième élément (R2) résistant monté entre un noeud de connexion et le deuxième bout (N22) de l'autre fil (SNL2) d'électrode, le troisième interrupteur (SW20) étant connecté au quatrième interrupteur (SW21) au noeud de connexion,
dans lequel le premier élément résistant est une résistance d'excursion haute,
dans lequel le deuxième élément résistant est une résistance d'excursion basse,
dans lequel l'unité de détection est configurée pour déterminer un état dans lequel un objet est pris, un état dans lequel un objet est tiré dans une direction perpendiculaire à une surface (110) latérale extérieure ou une surface (112) latérale intérieure de la porte et un état dans lequel un objet est tiré dans une direction oblique par rapport à la surface latérale extérieure ou à la surface latérale intérieure de la porte, sur la base d'une combinaison de tensions de sortie provenant du premier élément de détection sensible à la pression, du deuxième élément de détection sensible à la pression et du troisième élément de détection sensible à la pression.

2. Détecteur suivant la revendication 1,
dans lequel, en fonction du signal de mode, le circuit de commutation de mode est configuré pour mettre le premier interrupteur (SW10) et le deuxième interrupteur (SW11) dans un état fermé d'une manière complémentaire, et pour mettre le troisième interrupteur (SW20) et le quatrième interrupteur (SW21) dans un état fermé d'une manière complémentaire.

3. Détecteur suivant la revendication 2,
dans lequel le circuit (2) de détection comprend un circuit (CMP) de comparaison pourvu d'une borne (IN1) d'entrée connectée au un fil (SNL1) d'électrode et une borne (IN2) d'entrée à laquelle la première tension (Vd) est appliquée, et
dans lequel la première tension est une tension variable à appliquer à partir d'un circuit (4) variable de tension.

4. Détecteur suivant la revendication 1,
dans lequel chacun de la pluralité d'éléments de détection comprend quatre fils d'électrode, qui sont à distance les uns des autres, et
dans lequel chacun de la paire de fils d'électrode est configuré en connectant deux fils d'électrode des quatre fils l'un à l'autre.
